# EUROPÄISCHE PATENTSCHRIFT

(11) **EP 3 565 966 B1**
(45) Veröffentlichungstag und Bekanntmachung des Hinweises auf die Patenterteilung: **17.02.2021**
(21) Anmeldenummer: 18702483.1
(22) Anmeldetag: 30.01.2018
(51) Int. Cl.: F03D 7/02

(54) **WINDKRAFTANLAGE**
WIND TURBINE
AÉROGÉNÉRATEUR

(30) Priorität: 07.02.2017 DE 102017102375
(43) Veröffentlichungstag der Anmeldung: 13.11.2019
(73) Patentinhaber: HAWE Altenstadt Holding GmbH, 86972 Altenstadt (DE)
(72) Erfinder: JÄGER, Robert, 33334 Gütersloh (DE)
(74) Vertreter: Wittmer, Maximilian
(86) Internationale Anmeldenummer: PCT/EP2018/052232
(87) Internationale Veröffentlichungsnummer: WO 2018/145948

(56) Entgegenhaltungen:
- EP-A1- 3 104 001
- DE-A1-102004 057 739
- US-A1- 2008 164 751
- US-A1- 2011 014 048

## Beschreibung

Die vorliegende Erfindung betrifft eine Windkraftanlage mit einem Turm, einer an diesem gelagerten Gondel, einer in dieser um eine Rotationsachse drehbar gelagerten Rotorgruppe, und einem Rotor-Bremssystem, welches mindestens eine Bremsanordnung mit zumindest einem sich an der Gondel abstützenden ersten Bremselement und zumindest einem einen Teil der Rotorgruppe bildenden zweiten Bremselement umfasst, wobei auf die Bremsanordnung eine hydraulische Betätigungsanordnung wirkt mit einem Tank, einer Motor-Pumpe-Einheit, mindestens einem Betätigungszylinder und einer Leitungs- und Ventilanordnung mit einem in die den Brems-Arbeitsraum des mindestens einen Betätigungszylinders beaufschlagende Hydraulikleitung geschalteten Bremsventil in Form eines elektrisch aktivierbaren 3/2-Wegeventils, das den Brems-Arbeitsraum des mindestens einen Betätigungszylinders alternativ in seinem aktivierten Zustand mit der Motor-Pumpe-Einheit oder aber in seinem nicht-aktivierten Zustand mit dem Tank verbindet.

Windkraftanlagen der aktuell verbreitet genutzten und somit allgemein bekannten Art verfügen, wie vorstehend sowie im Oberbegriff des Anspruchs 1 angegeben, über ein Rotor-Bremssystem mit mindestens einer Bremsanordnung, die ihrerseits zumindest ein sich an der Gondel abstützendes, bremsendes erstes Bremselement und zumindest ein von diesem gebremstes, einen Teil der zu bremsenden Rotorgruppe bildendes zweites Bremselement umfasst. Ein solches Rotor-Bremssystem kommt nicht nur in verschiedenen regulären Betriebssituationen zum Einsatz. Insbesondere wird es auch bei der Durchführung von Wartungsarbeiten eingesetzt, um die Rotorgruppe zu bremsen. Und ebenso wichtig ist es bei der Errichtung der Windkraftanlage. Im Hinblick auf verschiedene mit dem Rotor-Bremssystem von Windkraftanlagen verbundene Aspekte wird beispielhaft verwiesen auf die DE 10 2004 057739 A1, EP 1990538 A2, EP 1866543 B1, DE 102012213358 A1, DE 102009026133 B4, DE 102009026131 B3 und DE 102005038243 B4.

Die vorliegende Erfindung hat sich zur Aufgabe gemacht, eine gegenüber dem Stand der Technik in sicherheitstechnischer Hinsicht verbesserte Windkraftanlage der einleitend dargelegten Art bereitzustellen.

Gelöst wird diese Aufgabenstellung gemäß der vorliegenden Erfindung durch Implementierung eines Rotor-Bremssystems, das sich über die gattungsgemäßen Merkmale hinausgehend durch die folgenden auszeichnet:
dem Bremsventil ist ein durch in dem Brems-Arbeitsraum des mindestens einen Betätigungszylinders herrschenden Betriebsdruck gesteuertes hydraulisches Betätigungsglied zugeordnet dergestalt, dass das Bremsventil bei einem oberhalb eines vorgegebenen Schwellenwerts herrschenden Betriebsdruck seinen aktivierten Zustand einnimmt;
das Bremsventil ist dabei Teil einer ein zweites elektrisch aktivierbares Wegeventil umfassenden Ventilgruppe;
das zweite elektrisch aktivierbare Wegeventil der Ventilgruppe bildet ein Ablassventil und ist dergestalt als 2/2-Wegeventil ausgeführt, das es den Brems-Arbeitsraum des mindestens einen Betätigungszylinders alternativ in seinem aktivierten Zustand mit dem Tank verbindet oder in seinem nicht-aktivierten Zustand die betreffende Verbindung sperrt;
zumindest bei aktiviertem Bremsventil ist in der Leitungsanordnung zwischen der Motor-Pumpe-Einheit und dem Brems-Arbeitsraum des mindestens einen Betätigungszylinders ein Haupt-Rückschlagventil mit Durchflussrichtung zu dem mindestens einen Betätigungszylinder wirksam.

In Umsetzung der vorliegenden Erfindung lässt sich mit einem ausgesprochen geringen apparativen Aufwand die Sicherheit von gattungsgemäßen Windkraftanlagen nennenswert erhöhen. Denn eine - durch entsprechende elektrische Aktivierung des Bremsventils - einmal betätigte Bremsanordnung bleibt selbst dann zuverlässig in dem gebremsten Modus, wenn - beispielsweise infolge eines Stromausfalls - sich die das Betätigen der Bremsanordnung bewirkende Stellung des Bremsventils nicht durch fortgesetzte Beaufschlagung des Elektromagneten (bzw. des sonstigen elektrischen Betätigungsgliedes) aufrechterhalten lässt. Der in dem Brems-Arbeitsraum des mindestens einen Betätigungszylinders herrschende, oberhalb eines vorgegebenen Schwellenwerts liegende Betriebsdruck sorgt selbst mittels des durch ihn aktivierten hydraulischen Betätigungsgliedes dafür, dass das Bremsventil (gänzlich unabhängig von dem elektrischen Betätigungsglied) in jener aktivierten Stellung verbleibt, bei der der Brems-Arbeitsraum des mindestens einen Betätigungszylinders nicht mit dem Tank, sondern vielmehr mit der Motor-Pumpe-Einheit verbunden ist. Ein Nachlassen der Bremswirkung aufgrund eines schleichenden Druckabbaus in dem mindestens einen Betätigungszylinder infolge einer Rückströmung von Hydraulikflüssigkeit über die in diesem Beispielsfall (wegen des Stromausfalls) ebenfalls funktionslose Motor-Pumpe-Einheit ist dabei durch das Haupt-Rückschlagventil wirksam ausgeschlossen. Durch die Erfindung lässt sich somit eine dauerhafte "Selbstsperrung" des Rotor-Bremssystems erreichen. Um diese zu beenden, wird der Betriebsdruck in dem Brems-Arbeitsraum des mindestens einen Betätigungszylinders über das gesonderte Ablassventil (in dessen aktivierter Stellung) abgebaut. Wird dabei ein vorgegebener Schaltdruck, der mehr oder weniger dem zum hydraulischen Aktivieren des Bremsventils erforderlichen Schwellenwert entsprechen kann, erreicht, kann das Bremsventil in seine nicht-aktivierte Stellung zurückkehren, in der der Brems-Arbeitsraum des mindestens einen Betätigungszylinders mit dem Tank verbunden ist.

Im Hinblick auf die vorstehend dargelegte Funktion ist gemäß besonders vorteilhaften Weiterbildungen vorgesehen, dass das Bremsventil und/oder das Ablassventil händisch in seinen jeweiligen aktivierten Zustand schaltbar ist/sind. Hierzu ist dem Bremsventil bzw. dem Ablassventil bevorzugt ein die händische Betätigung des betreffenden Ventils ermöglichendes manuelles Betätigungsglied zugeordnet. Dies trägt dem Umstand Rechnung, dass das Rotor-Bremssystem häufig in Betriebssituationen mit unzuverlässiger oder gar unterbrochener Stromversorgung zum Einsatz kommt. Bevorzugt ist das manuelle Betätigungsglied in Form einer "Totmann-Schaltung" ausgeführt, so dass das Bremsventil beim Loslassen des manuellen Betätigungsgliedes selbsttätig in seine nicht-aktivierte Stellung zurückkehrt, falls dann nicht das elektrische und/oder das hydraulische Betätigungsglied die aktivierte Stellung bewirken. In ganz besonders bevorzugter Weiterbildung können im Übrigen das manuelle Betätigungsglied und das hydraulische Betätigungsglied einen gemeinsamen Stößel umfassen. Diese erlaubt hinsichtlich der Baugröße besonders günstige Bauformen.

Ebenfalls unter Berücksichtigung der vorstehend dargelegten Zusammenhänge ist besonders vorteilhaft, wenn in hydraulischer Parallelanordnung zu der Motor-Pumpe-Einheit eine das Bremsventil versorgende manuell betätigbare Brems-Notpumpe vorgesehen ist. Bei dieser Weiterbildung kann die Bremsanordnung nicht nur zuverlässig (auch bei ausgefallener Stromversorgung) in ihrer gebremsten Konfiguration gehalten werden; vielmehr lässt sich unter Verwendung der Brems-Notpumpe die Bremsanordnung (auch bei ausgefallener Stromversorgung) aus ihrer ungebremsten in ihre gebremste Konfiguration bringen. In diesem Falle ist das Bremsventil so lange manuell in seiner aktiven Stellung zu halten (s. o.), bis ein ausreichender, die Aktivierung des Bremsventils durch das hydraulische Betätigungsglied bewirkender Betriebsdruck aufgebaut ist.

Eine wiederum andere bevorzugte Weiterbildung der vorliegenden Erfindung zeichnet sich dadurch aus, dass eine Verriegelungseinrichtung mit mindestens einem die Rotorgruppe gegenüber der Gondel mechanisch verriegelnden, hydraulisch betätigten Sperrglied vorgesehen ist. Sind, was aus Gründen der Redundanz sowie einer Reduzierung lokaler Belastungen vorteilhaft ist, mehrere solcher Sperrglieder vorgesehen, so sind die diese betätigenden hydraulischen Aktuatoren in besonders vorteilhafter Ausgestaltung dergestalt hydraulisch in Reihe geschaltet, dass sich eine Koppelung mit zwangssynchroner Bewegung der Sperrglieder ergibt.

Das hydraulische Bremssystem und die Verriegelungseinrichtung sind dabei, in wiederum anderer bevorzugter Weiterbildung der Erfindung, dergestalt miteinender verkoppelt, dass in die Leitungsanordnung, welche den das mindestens eine Sperrglied betätigenden hydraulischen Aktuator beaufschlagt, ein durch den Betriebsdruck im Brems-Arbeitsraum des mindestens einen Betätigungszylinders druckgesteuertes Sperrventil angeordnet ist. Das Sperrventil unterbindet dabei zuverlässig jegliche Beaufschlagung der die Sperrglieder betätigenden hydraulischen Aktuatoren, so lange der Betriebsdruck im Brems-Arbeitsraum des mindestens einen Betätigungszylinders unterhalb eines vorgegebenen Mindestwerts liegt, welcher auf eine sichere Blockierung der Rotorgruppe durch die Bremsanordnung abgestimmt ist. Besonders ausgeprägt sind die erzielbaren Vorteile, wenn dabei die hydraulischen Aktuatoren doppeltwirkend ausgeführt sind. Denn so lässt sich sicherstellen, dass (auch) das Entriegeln der Verriegelungseinrichtung durch entsprechende Beaufschlagung der hydraulischen Aktuatoren nur bei hinreichend gebremster Rotorgruppe erfolgen kann.

Anders als die hydraulischen Aktuatoren der Sperrglieder sind die Betätigungszylinder des Rotor-Bremssystems bevorzugt einfach wirkend ausgeführt. Sie weisen besonders bevorzugt jeweils eine mechanische Rückstellfeder auf. Auf diese Weise lassen sich erfindungsgemäße, die vorstehend dargelegten Vorzüge aufweisende Windkraftanlagen mit geringst möglichem apparativen Aufwand realisieren.

Unter Gesichtspunkten der baulichen Effizienz ist besonders günstig, wenn (auch) der das mindestens Sperrglied betätigende hydraulische Aktuator durch die Motor-Pumpe-Einheit der auf die Bremsanordnung wirkenden hydraulischen Betätigungsanordnung beaufschlagbar ist. Auch versorgungsseitig liegt somit bevorzugt eine Verkoppelung von Rotor-Bremssystem und Verriegelungseinrichtung vor. Die manuelle Versorgung der Verriegelungseinrichtung mit hydraulischer Leistung erfolgt indessen besonders bevorzugt unabhängig von der Brems-Notpumpe, indem in hydraulischer Parallelanordnung zu der Motor-Pumpe-Einheit eine das Sperrventil versorgende manuell betätigbare Verriegelungs-Notpumpe vorgesehen ist.

Prinzipiell ist im Rahmen der vorliegenden Erfindung für die Funktion nicht entscheidend, ob das Haupt-Rückschlagventil in das Bremsventil integriert oder aber als gesondertes Bauteil ausgeführt ist. Im zuletzt genannten Fall ist es bevorzugt in einen die Motor-Pumpe-Einheit mit dem Bremsventil verbindenden Leitungsstrang geschaltet. Im Hinblick auf die Funktionalität ist eine leckagefreie Ausführung des Haupt-Rückschlagventils sowie des Ablassventils (in dessen Sperrstellung) bedeutsam; denn hierdurch ergibt sich eine praktisch nicht begrenzte Dauer, während derer die Bremsanordnung durch die beschriebene Selbstsperrung des Rotor-Bremssystems gebremst bleibt. Generell ist insoweit für die Ventilelemente (in dem Bremsventil, dem Ablassventil und ggf. dem Sperrventil) die Ausführung als Sitzventil besonders vorteilhaft.

Im Folgenden wird die vorliegende Erfindung anhand eines in der Zeichnung veranschaulichten Ausführungsbeispiels näher erläutert. Dabei zeigt
- Fig. 1: einen hydraulischen Schaltplan des mit einer hydraulisch betätigten Sperreinrichtung kombinierten Rotor-Bremssystems und
- Fig. 2: einen Längsschnitt durch ein bei dem Rotor-Bremssystem nach Fig. 1 einsetzbares Bremsventil.

Nachdem sich die vorliegende Erfindung in der Ausführung der hydraulischen Betätigungsanordnung manifestiert, die auf die als solches bekannte Bremsanordnung des Rotor-Bremssystems einer üblichen Windkraftanlage wirkt, beschränkt sich die nachstehende Erläuterung der Erfindung anhand eines bevorzugten Ausführungsbeispiels auf eben die hydraulische Betätigungsanordnung. Die technische Umgebung (Turm, Gondel, Rotorgruppe mit Rotor, Getriebe, Generator, etc. und Bremsanordnung der Windkraftanlage) kann in jeder üblichen und dem Fachmann hinlänglich bekannten Weise ausgeführt sein, so dass sich insoweit eine Erläuterung erübrigt.

Die in der Zeichnung veranschauliche hydraulische Betätigungsanordnung, die auf eine Bremsanordnung mit zusammenwirkenden ersten Bremselementen, die sich an der Gondel abstützen, und zweiten Bremselementen, die einen Teil der Rotorgruppe bilden, wirkt, umfasst einen Tank 1, eine Motor-Pumpe-Einheit 2, vier Betätigungszylinder 3 und eine Leitungs- und Ventilanordnung. Die vier Betätigungszylinder 3 sind einfach wirkend ausgeführt. Ihr Kolbenarbeitsraum 5 bildet jeweils einen Brems-Arbeitsraum 6. Die Rückstellung des jeweiligen Kolbens 7 erfolgt mittels einer Rückstellfeder 8.

Die vier Betätigungszylinder 3 sind hydraulisch zueinander parallel geschaltet. Ihre Brems-Arbeitsräume 6 lassen sich aus der Motor-Pumpe-Einheit 2 über ein erstes Umschaltventil 9, dessen Funktion weiter unten näher erläutert wird, und ein Bremsventil 10 mit Hydraulikflüssigkeit beaufschlagen. Das Bremsventil 10 ist als - über einen Elektromagnet 11 - elektrisch aktivierbares 3/2-Wegeventil ausgeführt. Alternativ verbindet es die Brems-Arbeitsräume 6 der vier Betätigungszylinder 3 - in seinem aktivierten Zustand - mit der Motor-Pumpe-Einheit 2 oder aber - in seinem nicht-aktivierten Zustand - mit dem Tank 1. In der nicht-aktivierten Stellung des Bremsventils 10 sind die Brems-Arbeitsräume 6 der Betätigungszylinder 3 somit drucklos und die Bremsanordnung - unter Einwirkung der Rückstellfedern 8 - somit gelöst.

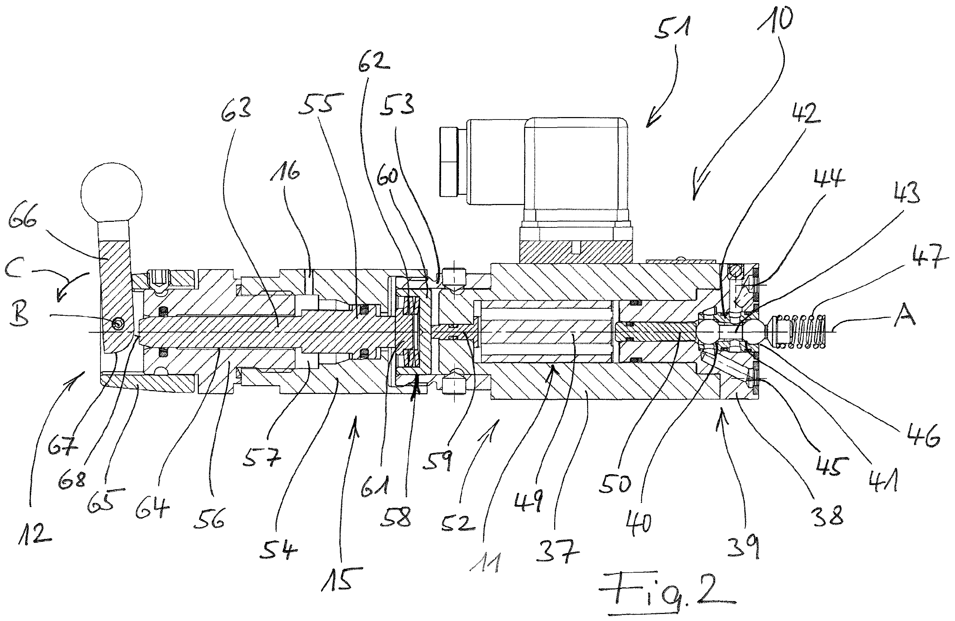

Das Bremsventil 10 lässt sich weiterhin auch mittels eines manuellen Betätigungsglieds 12 schalten. Letzteres ist als Handhebel 13 (vgl. Fig. 2) dergestalt ausgeführt, dass durch Umlegen des Handhebels 13 das Bremsventil 10 in seinen aktivierten Zustand schaltbar ist. Auch die für die Betätigung der Bremsanordnung erforderliche hydraulische Leistung lässt sich (z. B. bei Stromausfall) manuell bereitstellen, nämlich mittels der manuell betätigbaren Brems-Notpumpe 14, die das Bremsventil 10 in hydraulischer Parallelanordnung zu der Motor-Pumpe-Einheit 2 versorgen kann.

Dem Bremsventil 10 ist überdies ein hydraulisches Betätigungsglied 15 zugeordnet. Dessen Steuerdruckeingang 16 steht über die Steuerdruckleitung 17 mit der die Brems-Arbeitsräume 6 der Betätigungszylinder 3 beaufschlagenden Hydraulikleitung 18 in Verbindung, so dass an dem Steuerdruckeingang 16 des hydraulischen Betätigungsglieds 15 zumindest im Wesentlichen der in den Brems-Arbeitsräumen 6 herrschende Betriebsdruck anliegt. Das hydraulische Betätigungsglied 15 ist dabei (insbesondere, wie weiter unten im Zusammenhang mit Fig. 2 im Einzelnen dargelegt, durch Gestaltung und Dimensionierung hydraulischer Wirkungsflächen) auf einen vorgegebenen Schwellenwert dergestalt eingestellt, dass bei einem oberhalb eines Schwellenwerts herrschenden Betriebsdruck das hydraulische Betätigungsglied 15 das Bremsventil 10 in seiner aktivierten Stellung hält, und zwar unabhängig von einer elektrischen Beaufschlagung des Elektromagnets 11 und einer händischen Betätigung des manuellen Betätigungsglieds 12. Bei einem oberhalb eines Schwellenwerts herrschenden Betriebsdruck in den Brems-Arbeitsräumen 6 behält somit das Bremsventil 10 seine (auf welchem Wege auch immer) aktivierte Stellung bei. Unter Einwirkung des Haupt-Rückschlagventils 19, das in der das Bremsventil 10 mit der Motor-Pumpe-Einheit 2 sowie der Brems-Notpumpe 14 verbindenden gemeinsamen Leitungsstrang 20 angeordnet ist, bleibt die Hydraulikflüssigkeit bremszylinderseitig eingespannt, d. h. die Bremsanordnung betätigt.

Dem Lösen der Bremsanordnung dient ein gesondertes Ablassventil 21. Dieses und das Bremsventil 10 bilden eine Ventilgruppe 22. Das Ablassventil 21 ist dergestalt als (durch einen Elektromagnet 23) elektrisch aktivierbares 2/2-Wegeventil ausgeführt, das es die Brems-Arbeitsräume 6 der Betätigungszylinder 3 alternativ - in seinem aktivierten Zustand - mit dem Tank 1 verbindet oder - in seinem nicht-aktivierten Zustand - die betreffende Verbindung sperrt. Wird das Ablassventil 21 durch Beaufschlagung des zugeordneten Elektromagnets 23 in seine aktivierte Stellung gebracht, wird der in den Brems-Arbeitsräumen 6 herrschende Betriebsdruck - über die Drossel 24 gebremst - allmählich abgebaut. Sinkt er auf diese Weise unter einen vorgegebenen Schaltdruck, resultiert dies in einer Deaktivierung des hydraulischen Betätigungsglieds 15 des Bremsventils 10, so dass letzteres wieder seine nicht-aktivierte Stellung einnehmen kann. In dieser erfolgt der vollständige und rasche Abbau des verbleibenden Betriebsdruckes in den Brems-Arbeitsräumen 6 zum Tank 1. Zusätzlich zu der Betätigung über den zugeordneten Elektromagnet 23 ist das Ablassventil 21 auch über ein manuelles Betätigungsglied 25 händisch in seinen aktivierten Zustand schaltbar.

Um die Rotorgruppe mechanisch blockieren zu können, ist weiterhin - in wiederum als solches bekannter Weise - eine Verriegelungseinrichtung mit drei die Rotorgruppe gegenüber der Gondel mechanisch verriegelnden Sperrgliedern vorgesehen. Diese werden durch drei zugeordnete, als Hydraulikzylinder 26 ausgeführte hydraulische Aktuatoren 27 betätigt. Die drei Hydraulikzylinder 26 sind doppeltwirkend ausgeführt und dergestalt hydraulisch in Reihe geschaltet, dass sich eine Koppelung mit zwangssynchroner Bewegung der Kolben 28 und somit der von diesen betätigten Sperrglieder ergibt. Durch Abstimmung der jeweils miteinander kommunizierenden Wirkflächen zweier miteinander hydraulisch gekoppelter Hydraulikzylinder 26 aufeinander lässt sich dabei ein Gleichlauf aller drei Kolben erreichen.

Auch die drei hydraulischen Aktuatoren 27 lassen sich aus der Motor-Pumpe-Einheit 2, die (auch) der der auf die Bremsanordnung wirkenden hydraulischen Betätigungsanordnung zuzuordnen ist, beaufschlagen, nämlich durch entsprechende Ansteuerung des bereits weiter oben erwähnten ersten Umschaltventils 9 sowie des weiteren, zweiten Umschaltventils 29. Eine Beaufschlagung der hydraulischen Aktuatoren 27 ist dabei aber weiterhin davon abhängig, dass die Bremsanordnung betätigt ist, d. h. dass der in den Brems-Arbeiträumen 6 der Betätigungszylinder 3 herrschende Betriebsdruck einen Mindestwert übersteigt. Hierzu ist in die Leitungsanordnung, welche die drei hydraulischen Aktuatoren 27 mit der Motor-Pumpe-Einheit 2 verbindet, ein Sperrventil 30 angeordnet, welches durch den Betriebsdruck in den Brems-Arbeitsräumen 6 druckgesteuert ist. Eine Steuerdruckleitung 31 verbindet hierzu den Steuerdruckeingang 32 des hydraulischen Betätigungsgliedes 33 des Sperrventils 30 mit den Brems-Arbeitsräumen 6. Hydraulisch zwischen das Sperrventil 30 und die Aktuatoranordnung 34 ist weiterhin ein manuell betätigbares Umsteuerventil 35 geschaltet, mittels dessen zwischen Verriegeln und Entriegeln umgeschaltet werden kann.

In hydraulischer Parallelanordnung zu der Motor-Pumpe-Einheit 2 ist eine das Sperrventil 30 versorgende manuell betätigbare Verriegelungs-Notpumpe 36 vorgesehen.

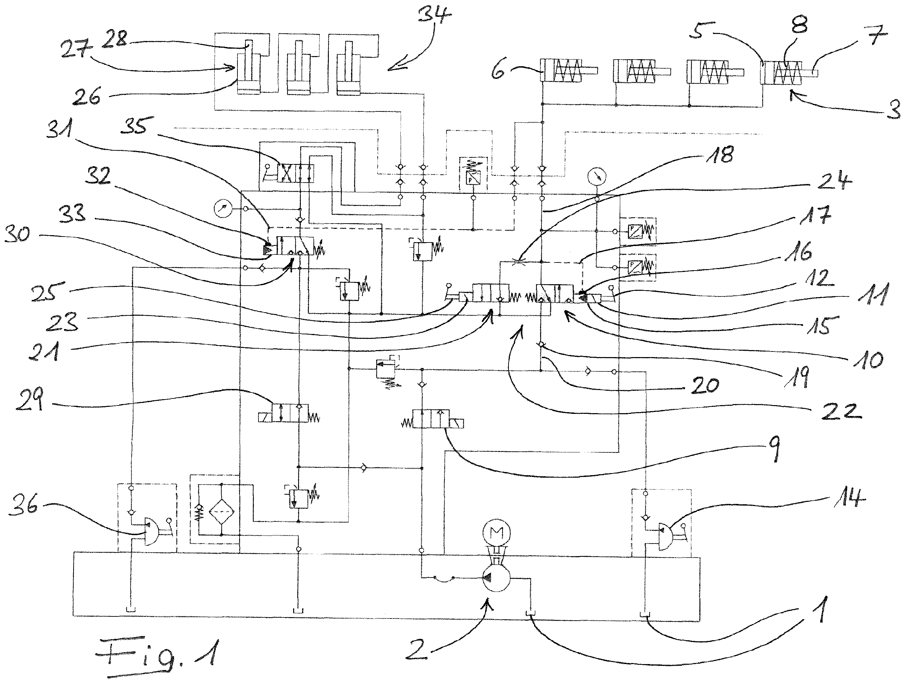

In dem Hydraulikschaltplan nach Fig. 1 sind einige weitere Elemente (Sicherheits- bzw. Druckbegrenzungsventile, Filter, Druckschalter, Manometer) vorgesehen, deren Funktion sich dem Fachmann ohne weiteres erschließt und deren Erläuterung im Detail daher entbehrlich ist.

Nur zur Vermeidung von Missverständnissen ist vorsorglich darauf hinzuweisen, dass die elektrische Ansteuerung der verschiedenen Ventile, ohne dass dies veranschaulicht wäre, in dem Sinne hydraulisch verstärkt werden kann, dass eine elektrische Pilotstufe auf eine die Umschaltung des Ventils bewirkende hydraulische Leistungsstufe wirkt.

Das in Fig. 2 illustrierte Bremsventil 10 umfasst ein aus einem Grundkörper 37 und einem Anschlussdeckel 38 aufgebautes Gehäuse 39. In dem Anschlussdeckel 38 ist ein zwei Ventilsitze 40 und 41 ausbildender Ventileinsatz 42 aufgenommen. In diesem wiederum ist ein Doppel-Ventilkörper 43 längs der Achse A verschiebbar aufgenommen, welcher mit den beiden Ventilsitzen 40 und 41 im Sinne zweier alternativ gegensinnig geöffneter bzw. gesperrter Sitzventile zusammenwirkt. Der sogenannte Doppel-Ventilkörper 43 stellt dabei eine dreiteilige Aneinanderreihung von - nicht fest miteinander verbundenen - Einzelelementen dar, nämlich zweier mit den Ventilsitzen 40 und 41 zusammenwirkender Kugeln (bevorzugt aus Stahl) und eines zwischen diesen angeordneten Zwischenstifts (bevorzugt aus Messing). Die Länge des Zwischenstifts gibt dabei das Maß vor, um das eine Kugel von dem zugeordneten Ventilsitz abhebt, wenn die andere Kugel an dem zugeordneten Ventilsitz anliegt.

In dem Anschlussdeckel 38 sowie dem Ventileinsatz 42 sind drei Strömungspfade und zugehörige Anschlüsse ausgeführt, nämlich ein (mit den Betätigungszylindern 3 verbundener) Arbeitsanschluss 44, ein (mit dem Tank 1 verbundener) Tankanschluss 45 und ein (mit der Motor-Pumpe-Einheit 2 verbundener) Druckanschluss 46. Infolge der auf den Doppel-Ventilkörper 43 wirkenden Ventilfeder 47 ist in der Grundstellung des Bremsventils 10 der Arbeitsanschluss 44 zum Tankanschluss 45 offen und zum Druckanschluss 46 gesperrt.

Zur elektrischen Betätigung des Bremsventils 10, damit dieses seine aktivierte, den Arbeitsanschluss 44 mit dem Druckanschluss 46 (sowie der Motor-Pumpe-Einheit 2) verbindende und gegenüber dem Tankanschluss 45 (sowie dem Tank 1) sperrende Stellung einnimmt, ist in dem Gehäuse 39 ein Elektromagnet 11 untergebracht. Dessen Anker 49 wirkt auf einen längs der Achse A verschiebbaren, seinerseits auf den Doppel-Ventilkörper 43 wirkenden Stift 50. Die elektrische Beaufschlagung des Elektromagnets 11 erfolgt über den elektrischen Anschlussblock 51.

In baulicher Reihenschaltung zu dem vorstehend beschriebenen elektrischen Betätigungsglied 52 ist ein hydraulisches Betätigungsglied 15 vorgesehen. Dieses umfasst einen - über einen Zwischenring 53 - mit dem Grundkörper 37 des Gehäuses 39 verbundenen Zylinder 54 mit einem darin längs der Achse A verschiebbar geführten Kolben 55. Mit dem Zylinder 54 ist eine Abschlussbuchse 56 dichtend verschraubt, welche gemeinsam mit dem Zylinder 54 und dem Kolben 55 einen Arbeitsraum 57 definiert. Eine Druckbeaufschlagung des Arbeitsraumes 57 mittels eines an dem Steuereingang 16 des hydraulischen Betätigungsglieds 15 anliegenden Steuerdrucks bewirkt eine Verschiebung des Kolbens 55 nach rechts, wodurch über einen Federpuffer 58, einen Zwischenstößel 59, den Anker 49 des Elektromagnets 11 und den Stift 50 der Doppelventilkörper 43 nach rechts geschoben wird, so dass das Bremsventil 10 - unabhängig von einer Ansteuerung des Elektromagnets 11 - seine aktivierte Stellung (s. o.) einnimmt. Der Federpuffer 58 stellt dabei in Form einer Überlastsicherung sicher, dass die zulässigen Kräfte zwischen Doppel-Ventilkörper 43 und dem Ventilsitz 40 nicht überschritten werden, so dass eine Beschädigung des (typischerweise aus Messing bestehenden) DoppelVentilkörpers 43 zuverlässig ausgeschlossen ist. Hierzu umfasst der Federpuffer 58 einen in dem Zwischenring 53 längs der Achse A verschiebbar geführten Topf 60, eine Platte 61 und zwischen Topf 60 und Platte 61 wirkende Tellerfedern 62, wobei der Kolben 55 auf die Platte 61 des Federpuffers 58 wirkt und dessen Topf 60 auf den Zwischenstößel 59.

In baulicher Reihenschaltung zu dem hydraulischen Betätigungsglied 15 ist ein manuelles Betätigungsglied 12 vorgesehen. Hierzu ist der Kolben 55 des hydraulischen Betätigungsglieds 15 Teil eines Stößels 63, der sich durch die Bohrung 64 der Abschlusshülse 56 hindurch erstreckt. An dem freien Ende der Abschlusshülse 56 ist eine Halterung 65 mit einem darin um die Achse B schwenkbar gelagerten Handhebel 66 angebracht. Bei seiner Betätigung (Pfeil C) drückt die Exzenterfläche 67 auf die Stirnseite 68 des Stößels 63 und schiebt diesen auf diese Weise nach rechts. Hierdurch nimmt, in gleicher Weise wie weiter oben im Zusammenhang mit dem hydraulischen Betätigungsglied 15 beschrieben, das Bremsventil 10 - unabhängig von einer Ansteuerung des elektrischen Betätigungsglieds 52 - seine aktivierte Stellung ein. Die Geometrie des Handhebels 66, insbesondere von dessen Exzenterfläche 67 im Verhältnis zur Schwenkachse B, sind dabei so gewählt, dass keine Selbsthemmung vorliegt, so dass der Handhebel unter der Wirkung der Ventilfeder 47 und der Kette von Übertragungsgliedern sowie des Stößels 63 in seine Ausgangsstellung zurückkehrt, sobald er nicht länger aktiv betätigt wird (sog. "Totmann-Schaltung"). Erkennbar können zu diesem Zweck auch sonstige und/oder weitere Elemente zum Einsatz kommen, beispielsweise eine direkt auf den Handhebel 66 wirkende Rückstellfeder.

## Patentansprüche

1. Windkraftanlage mit einem Turm, einer an diesem gelagerten Gondel, einer in dieser um eine Rotationsachse drehbar gelagerten Rotorgruppe, und einem Rotor-Bremssystem, welches mindestens eine Bremsanordnung mit zumindest einem sich an der Gondel abstützenden ersten Bremselement und zumindest einem einen Teil der Rotorgruppe bildenden zweiten Bremselement umfasst, wobei auf die Bremsanordnung eine hydraulische Betätigungsanordnung wirkt mit einem Tank (1), einer Motor-Pumpe-Einheit (2), mindestens einem Betätigungszylinder (3) und einer Leitungs- und Ventilanordnung mit einem in die den Brems-Arbeitsraum (6) des mindestens einen Betätigungszylinders (3) beaufschlagende Hydraulikleitung geschalteten Bremsventil (10) in Form eines elektrisch aktivierbaren 3/2-Wegeventils, das den Brems-Arbeitsraum (6) des mindestens einen Betätigungszylinders (3) alternativ in seinem aktivierten Zustand mit der Motor-Pumpe-Einheit (2) oder aber in seinem nicht-aktivierten Zustand mit dem Tank (1) verbindet,
**gekennzeichnet durch** folgende Merkmale:
dem Bremsventil (10) ist ein durch in dem Brems-Arbeitsraum (6) des mindestens einen Betätigungszylinders (3) herrschenden Betriebsdruck gesteuertes hydraulisches Betätigungsglied (15) zugeordnet dergestalt, dass das Bremsventil (10) bei einem oberhalb eines vorgegebenen Schwellenwerts herrschenden Betriebsdruck seinen aktivierten Zustand einnimmt;
das Bremsventil (10) ist dabei Teil einer ein zweites elektrisch aktivierbares Wegeventil umfassenden Ventilgruppe (22);
das zweite elektrisch aktivierbare Wegeventil der Ventilgruppe (22) bildet ein Ablassventil (21) und ist dergestalt als 2/2-Wegeventil ausgeführt, das es den Brems-Arbeitsraum (6) des mindestens einen Betätigungszylinders (3) alternativ in seinem aktivierten Zustand mit dem Tank (1) verbindet oder in seinem nicht-aktivierten Zustand die betreffende Verbindung sperrt;
zumindest bei aktiviertem Bremsventil (10) ist in der Leitungsanordnung zwischen der Motor-Pumpe-Einheit (2) und dem Brems-Arbeitsraum (6) des mindestens einen Betätigungszylinders (3) ein Haupt-Rückschlagventil (19) mit Durchflussrichtung zu dem mindestens einen Betätigungszylinder (3) wirksam.

2. Windkraftanlage nach Anspruch 1, **dadurch gekennzeichnet, dass** dem Bremsventil (10) ein manuelles Betätigungsglied (12) dergestalt zugeordnet ist, dass es händisch in seinen aktivierten Zustand schaltbar ist.

3. Windkraftanlage nach Anspruch 2, **dadurch gekennzeichnet, dass** das manuelle Betätigungsglied (12) und das hydraulische Betätigungsglied (15) einen gemeinsamen Stößel (63) umfassen.

4. Windkraftanlage nach einem der Ansprüche 1 bis 3, **dadurch gekennzeichnet, dass** dem Ablassventil (21) ein manuelles Betätigungsglied (25) dergestalt zugeordnet ist, dass es händisch in seinen aktivierten Zustand schaltbar ist.

5. Windkraftanlage nach einem der Ansprüche 1 bis 4, **dadurch gekennzeichnet, dass** das Haupt-Rückschlagventil (19) in einen die Motor-Pumpe-Einheit (2) mit dem Bremsventil (10) verbindenden Leitungsstrang (20) geschaltet ist.

6. Windkraftanlage nach einem der Ansprüche 1 bis 5, **dadurch gekennzeichnet, dass** das Haupt-Rückschlagventil (19) leckagefrei ausgeführt ist.

7. Windkraftanlage nach einem der Ansprüche 1 bis 6, **dadurch gekennzeichnet, dass** in hydraulischer Parallelanordnung zu der Motor-Pumpe-Einheit (2) eine das Bremsventil (10) versorgende manuell betätigbare Brems-Notpumpe (14) vorgesehen ist.

8. Windkraftanlage nach einem der Ansprüche 1 bis 7, **dadurch gekennzeichnet, dass** der mindestens Betätigungszylinder (3) einfach wirkend ausgeführt ist und eine mechanische Rückstellfeder (8) aufweist.

9. Windkraftanlage nach einem der Ansprüche 1 bis 8, **dadurch gekennzeichnet, dass** eine Verriegelungseinrichtung mit mindestens einem die Rotorgruppe gegenüber der Gondel mechanisch verriegelnden, hydraulisch betätigten Sperrglied vorgesehen ist.

10. Windkraftanlage nach Anspruch 9, **dadurch gekennzeichnet, dass** der das mindestens Sperrglied betätigende hydraulische Aktuator (27) durch die Motor-Pumpe-Einheit (2) der auf die Bremsanordnung wirkenden hydraulischen Betätigungsanordnung beaufschlagbar ist.

11. Windkraftanlage nach Anspruch 9 oder Anspruch 10, **dadurch gekennzeichnet, dass** in hydraulischer Parallelanordnung zu der Motor-Pumpe-Einheit (2) eine den mindestens einen hydraulischen Aktuator (27) versorgende manuell betätigbare Verriegelungs-Notpumpe (36) vorgesehen ist.

12. Windkraftanlage nach einem der Ansprüche 9 bis 11, **dadurch gekennzeichnet, dass** in die Leitungsanordnung, welche den das mindestens eine Sperrglied betätigenden hydraulischen Aktuator (27) beaufschlagt, ein durch den Betriebsdruck im Brems-Arbeitsraum (6) des mindestens einen Betätigungszylinders (3) druckgesteuertes Sperrventil (30) angeordnet ist.

13. Windkraftanlage nach einem der Ansprüche 9 bis 12, **dadurch gekennzeichnet, dass** der mindestens eine hydraulische Aktuator (27) doppeltwirkend ausgeführt ist.

14. Windkraftanlage nach einem der Ansprüche 9 bis 13, **dadurch gekennzeichnet, dass** mehrere durch jeweils einen individuell zugeordneten hydraulischen Aktuator (27) betätigte Sperrglieder vorgesehen sind, wobei die hydraulischen Aktuatoren (27) dergestalt hydraulisch in Reihe geschaltet sind, dass sich eine Koppelung mit zwangssynchroner Bewegung der Sperrglieder ergibt.

15. Windkraftanlage nach einem der Ansprüche 1 bis 14, **dadurch gekennzeichnet, dass** das Ablassventil (21) leckagefrei ausgeführt ist.

## Claims

1. Wind turbine having a tower, a nacelle mounted thereon, a rotor group rotatably mounted therein about an axis of rotation, and a rotor brake system which comprises at least one brake arrangement having at least one first brake element supported on the nacelle and at least one second brake element forming part of the rotor group, wherein a hydraulic actuating arrangement acting on the brake arrangement having a tank (1), a motor-pump unit (2), at least one actuating cylinder (3) and a line and valve arrangement having a brake valve (10) in the form of an electrically activatable 3/2-way valve which is disposed in the hydraulic line which acts on the brake working space (6) of the at least one actuating cylinder (3) and which connects the brake working space (6) of the at least one actuating cylinder (3) in its activated state to the motor-pump unit (2) or alternatively in its non-activated state to the tank (1), **characterized by the** following features:
a hydraulic actuating element (15) controlled by the operating pressure prevailing in the brake working space (6) of the at least one actuating cylinder (3) is assigned to the brake valve (10) in such a way that the brake valve (10) assumes its activated state at an operating pressure prevailing above a predetermined threshold value;
the brake valve (10) is thereby part of a valve group (22) comprising a second electrically activatable directional valve;
the second electrically activatable directional control valve of the valve group (22) forms a drain valve (21) and is designed as a 2/2-way valve in such a way that it connects the brake working space (6) of the at least one cylinder (3) in its activated state connected to the tank (1) or in its non-activated state disconnects the respective connection;
at least when the brake valve (10) is activated, a main non-return valve (19) with flow direction to the at least one actuating cylinder (3) is effective in the line arrangement between the motor-pump unit (2) and the brake working space (6) of the at least one actuating cylinder (3).

2. Wind turbine according to claim 1, **characterized in that** a manual actuating member (12) is assigned to the brake valve (10) in such a way that it can be manually switched into its activated state.

3. Wind turbine according to claim 2, **characterized in that** the manual actuator (12) and the hydraulic actuator (15) comprise a common tappet (63).

4. Wind turbine according to one of claims 1 to 3, **characterized in that** a manual actuating member (25) is assigned to the drain valve (21) in such a way that it can be manually switched to its activated state.

5. Wind turbine according to one of claims 1 to 4, **characterized in that** the main non-return valve (19) is connected into a connection line (20) connecting the motor-pump unit (2) with the brake valve (10).

6. Wind turbine according to one of claims 1 to 5, **characterized in that** the main non-return valve (19) is leakage-free.

7. Wind turbine according to one of claims 1 to 6, **characterized in that** a manually operable emergency brake pump (14) supplying the brake valve (10) is provided in hydraulic parallel arrangement to the motor-pump unit (2).

8. Wind turbine according to one of claims 1 to 7, **characterized in that** the at least one actuating cylinder (3) is of single-acting type and has a mechanical return spring (8).

9. Wind turbine according to one of claims 1 to 8, **characterized in that** a locking device with at least one hydraulically actuated locking member mechanically locking the rotor group with respect to the nacelle is provided.

10. Wind turbine according to claim 9, **characterized in that the** hydraulic actuator (27) actuating the at least one locking member can be acted upon by the motor-pump unit (2) of the hydraulic actuating arrangement acting on the brake arrangement.

11. Wind turbine according to claim 9 or claim 10, **characterized in that** a manually operable locking emergency pump (36) supplying the at least one hydraulic actuator (27) is provided in hydraulic parallel arrangement to the motor-pump unit (2).

12. Wind turbine according to one of the claims 9 to 11, **characterized in that** a shut-off valve (30) pressure-controlled by the operating pressure in the brake working chamber (6) of the at least one actuating cylinder (3) is arranged in the line arrangement which acts on the hydraulic actuator (27) actuating the at least one locking member.

13. Wind turbine according to one of claims 9 to 12, **characterized in that** the at least one hydraulic actuator (27) is of double-acting type.

14. Wind turbine according to one of the claims 9 to 13, **characterized in that a** plurality of locking members are provided which are each actuated by an individually assigned hydraulic actuator (27), the hydraulic actuators (27) being connected hydraulically in series in such a way that a coupling with forced synchronous movement of the locking members results.

15. Wind turbine according to one of claims 1 to 14, **characterized in that** the drain valve (21) is leakage-free.

## Revendications

1. Aérogénérateur comprenant un mât, une nacelle supportée sur celui-ci, un groupe rotor supporté dans celle-ci de façon à pouvoir tourner autour un axe de rotation, et un système de freinage du rotor qui comprend au moins un ensemble de freinage comportant au moins un premier élément de freinage soutenu sur la nacelle et au moins un deuxième élément de freinage faisant partie de la groupe rotor, un ensemble d'actionnement hydraulique étant destiné à agir sur ledit ensemble de freinage, ledit ensemble d'actionnement comprenant un réservoir (1), une unité moteur-pompe (2), au moins un vérin d'actionnement (3) et un ensemble de conduits et de valves comportant une valve de freinage (10), sous forme d'un distributeur 3/2 électriquement activable, qui est placée dans le conduit hydraulique destiné à pressuriser l'espace de travail (6) de freinage dudit au moins un vérin d'actionnement (3), ledit distributeur connectant alternativement, dans son état activé, l'espace de travail (6) de freinage dudit au moins un vérin d'actionnement (3) à ladite unité moteur-pompe (2) ou, dans son état non activé, audit réservoir (1),
**caractérisé en ce que** ;
à ladite valve de freinage (10) est associé un organe d'actionnement hydraulique (15) commandé par la pression de service présente dans l'espace de travail (6) de freinage dudit au moins un vérin d'actionnement (3) de façon que ladite valve de freinage (10) se trouve dans son état activé lors d'une pression de service au-dessus d'une valeur seuil prédéterminée ;
en même temps, ladite valve de freinage (10) fait partie d'un groupe de valve (22) comportant un deuxième distributeur électriquement activable ;
ledit deuxième distributeur électriquement activable du groupe de valve (22) constitue une valve de vidange (21) et il est réalisé sous forme d'un distributeur 2/2 de façon qu'il connecte alternativement, dans son état activé, l'espace de travail (6) de freinage dudit au moins un vérin d'actionnement (3) audit réservoir (1) ou, dans son état non activé, bloque la connexion concernée ;
au moins lorsque ladite valve de freinage (10) est activée, dans ledit ensemble de conduits entre ladite unité moteur-pompe (2) et l'espace de travail (6) de freinage dudit au moins un vérin d'actionnement (3) un clapet anti-retour principal (19), dont la direction de passage est vers ledit au moins un vérin d'actionnement (3), prend effet.

2. Aérogénérateur selon la revendication 1, **caractérisé en ce que** à ladite valve de freinage (10) est associé à un organe d'actionnement manuel (12) de façon qu'elle peut être amenée à son état activé de façon manuelle.

3. Aérogénérateur selon la revendication 2, **caractérisé en ce que** ledit organe d'actionnement manuel (12) et ledit organe d'actionnement hydraulique (15) comprennent un poussoir (63) commun.

4. Aérogénérateur selon l'une quelconque des revendications 1 à 3, **caractérisé en ce que** à ladite valve de vidange (21) est associé à un organe d'actionnement manuel (25) de façon qu'elle peut être amenée à son état activé de façon manuelle.

5. Aérogénérateur selon l'une quelconque des revendications 1 à 4, **caractérisé en ce que** ledit clapet anti-retour principal (19) est placé dans une branche de conduit (20) connectant ladite unité moteur-pompe (2) à ladite valve de freinage (10).

6. Aérogénérateur selon l'une quelconque des revendications 1 à 5, **caractérisé en ce que** ledit clapet anti-retour principal (19) est mis en oeuvre sans fuites.

7. Aérogénérateur selon l'une quelconque des revendications 1 à 6, **caractérisé en ce que**, disposée hydrauliquement en parallèle à ladite unité moteur-pompe (2), une pompe d'urgence (14) de freinage à actionnement manuel destinée à l'alimentation de ladite valve de freinage (10) est prévue.

8. Aérogénérateur selon l'une quelconque des revendications 1 à 7, **caractérisé en ce que** ledit au moins un vérin d'actionnement (3) est du type à simple effet et comporte un ressort de rappel mécanique (8).

9. Aérogénérateur selon l'une quelconque des revendications 1 à 8, **caractérisé en ce que** des moyens de verrouillage sont prévus qui comportent au moins un organe de verrouillage à actionnement hydraulique destiné à verrouiller mécaniquement le groupe rotor par rapport à la nacelle.

10. Aérogénérateur selon la revendication 9, **caractérisé en ce que** l'actionneur (27) destiné à actionner ledit au moins un organe de verrouillage est apte à être pressurisé par ladite unité moteur-pompe (2) dudit ensemble d'actionnement hydraulique agissant sur l'ensemble de freinage.

11. Aérogénérateur selon la revendication 9 ou la revendication 10, **caractérisé en ce que**, disposée hydrauliquement en parallèle à ladite unité moteur-pompe (2), une pompe d'urgence (36) de verrouillage à actionnement manuel destinée à l'alimentation dudit au moins un actionneur hydraulique (27) est prévu.

12. Aérogénérateur selon l'une quelconque des revendications 9 à 11, **caractérisé en ce que**, dans l'ensemble de conduits destiné à pressuriser l'actionneur hydraulique (27) pour l'actionnement dudit au moins un organe de verrouillage, une valve d'obturation (30) pilotée par la pression de service dans l'espace de travail (6) de freinage dudit au moins un vérin d'actionnement (3) est disposée.

13. Aérogénérateur selon l'une quelconque des revendications 9 à 12, **caractérisé en ce que** ledit au moins un actionneur hydraulique (27) est du type à double effet.

14. Aérogénérateur selon l'une quelconque des revendications 9 à 13, **caractérisé en ce que** plusieurs organes de verrouillage sont prévus qui sont actionnés respectivement par un actionneur hydraulique (27) individuellement associé, lesdits actionneurs hydrauliques (27) étant connectés en série de tel façon qu'il en résulte un couplage à synchronisation forcée du mouvement des organes de verrouillage.

15. Aérogénérateur selon l'une quelconque des revendications 1 à 14, caractérisé en ce ladite valve de vidange (21) est mise en oeuvre sans fuites.
